Europäisches Patentamt

European Patent Office

Office européen des brevets

(19)

(11) Veröffentlichungsnummer: **0 049 470**
A2

(12) # EUROPÄISCHE PATENTANMELDUNG

(21) Anmeldenummer: **81107776.7**

(22) Anmeldetag: **30.09.81**

(51) Int. Cl.³: **F 16 H 25/06**
F 16 H 35/02
//B26D5/14

(30) Priorität: **30.09.80 DE 3036930**

(43) Veröffentlichungstag der Anmeldung:
**14.04.82 Patentblatt 82/15**

(84) Benannte Vertragsstaaten:
**FR GB IT**

(71) Anmelder: **Windmöller & Hölscher**
**Münsterstrasse 48-52**
**D-4540 Lengerich i.W.(DE)**

(72) Erfinder: **Feldkämper, Richard**
**Widumweg 3**
**D-4540 Lengerich i.W.(DE)**

(74) Vertreter: **Lorenz, Eduard et al,**
**Widenmayerstrasse 23**
**D-8000 München 22(DE)**

(54) **Ungleichförmigkeitsgetriebe, vorzugsweise zum Antrieb von Messerwalzen.**

(57) Ein Ungleichförmigkeitsgetriebe, vorzugsweise zum Antrieb von Messerwalzen, besteht aus einer frei drehbar auf der Abtriebswelle gelagerten Schwungscheibe zum Massenausgleich. Die Schwungscheibe und die Abtriebswelle sind mit je einem Kurbelzapfen versehen, die von einer Antriebsscheibe angetrieben werden. Zur Konstruktionsvereinfachung gleiten beide Kurbelzapfen in einer gemeinsamen, auf einer Durchmesserlinie der Antriebsscheibe liegenden und mit dieser fest verbundenen Führung. Dabei durchsetzt der Kurbelzapfen der Antriebswelle die Schwungscheibe in einem bogenförmig gekrümmten Langloch.

Fig. 1

EP 0 049 470 A2

Windmöller & Hölscher,
4540 Lengerich

Ungleichförmigkeitsgetriebe, vorzugsweise
zum Antrieb von Messerwalzen

Die Erfindung betrifft ein Ungleichförmigkeitsgetriebe
nach dem Oberbegriff des Patentanspruchs 1.

Werden Messerwalzen durch Ungleichförmigkeitsgetriebe
angetrieben, ist der Antrieb wegen der abwechselnden
Beschleunigung und Verzögerung der Messerwalze ungleichmäßigen Belastungen ausgesetzt, die durch gegensinnig
beschleunigte und verzögerte Schwungmassen vergleichmäßigt
werden können.

Bei einem aus der DE-OS 27 24 026 bekannten Ungleichförmigkeitsgetriebe nach dem Oberbegriff des Patentanspruchs 1
ist auf dem Kurbelzapfen ein Doppelschieber frei drehbar
gelagert, der an seinen Enden mit langlochartigen Kulissen
versehen ist, in die einerseits ein Zapfen eingreift, der
auf einer Endplatte der Eingangswelle befestigt ist, und
andererseits ein Zapfen, der auf der auf der Abtriebswelle
gelagerten Schwungscheibe befestigt ist, so daß sich der
Doppelschieber exzentrisch um die Abtriebswelle dreht.
Das bekannte Ungleichförmigkeitsgetriebe weist eine verhältnismäßig aufwendige Konstruktion auf, weil zur Übertragung
der ungleichförmigen Bewegungen auf die Abtriebswelle und
die Schwungmasse drei Zapfen erforderlich sind, die durch
den Doppelschieber miteinander gekuppelt sind.

Aufgabe der Erfindung ist es daher, ein gegenüber dem bekannten Ungleichförmigkeitsgetriebe konstruktiv vereinfachtes Ungleichförmigkeitsgetriebe zu schaffen.

Erfindungsgemäß wird diese Aufgabe durch die in dem Kennzeichen des Patentanspruchs 1 angegebenen Merkmale gelöst.
Das erfindungsgemäße Ungleichförmigkeitsgetriebe zeichnet
sich durch eine einfache, aus wenigen Teilen bestehende
Konstruktion aus, weil nur ein Kurbelschleifengetriebe vorgesehen ist, in dessen nutförmiger Gleitführung sowohl der
Kurbelzapfen der Kurbelwelle als auch der die Schwungscheibe
mit entgegengesetzter Beschleunigung antreibende Kurbelzapfen
geführt sind.

Nach einem weiteren Vorschlag wird die gestellte Aufgabe
erfindungsgemäß durch die Merkmale des Patentanspruchs 2
gelöst.

- 3 -

Das Verschieben von Teilen einer Kurbelwelle in rotierenden
Gleitführungen ist aus der DE-AS 10 12 792 an sich bekannt,
die jedoch eine Einrichtung zur Hubverstellung und kein
Ungleichförmigkeitsgetriebe betrifft.

Ausführungsbeispiele der Erfindung werden nachstehend anhand
der Zeichnung näher erläutert. In dieser zeigt

Fig. 1 einen Schnitt durch ein Kurbelschleifengetriebe mit Ausgleichsmasse und mit einer
verschwenkbaren Lagerung der Welle für die
Gleitführung,

Fig. 2 eine Seitenansicht des Kurbelschleifengetriebes
nach Fig. 1,

Fig. 3 eine Draufsicht auf die Schwungscheibe,

Fig. 4 einen teilweisen Schnitt durch ein Kurbelschleifengetriebe mit Ausgleichsmasse mit
zwei gleichachsig in einem längsverschieblichen
Lagerbock gelagerten Kurbelwellen,

Fig. 5 eine Seitenansicht des Kurbelschleifengetriebes
nach Fig. 4, und

Fig. 6  ein Diagramm mit den in den Kurbelschleifengetrieben auftretenden Massenkräften.

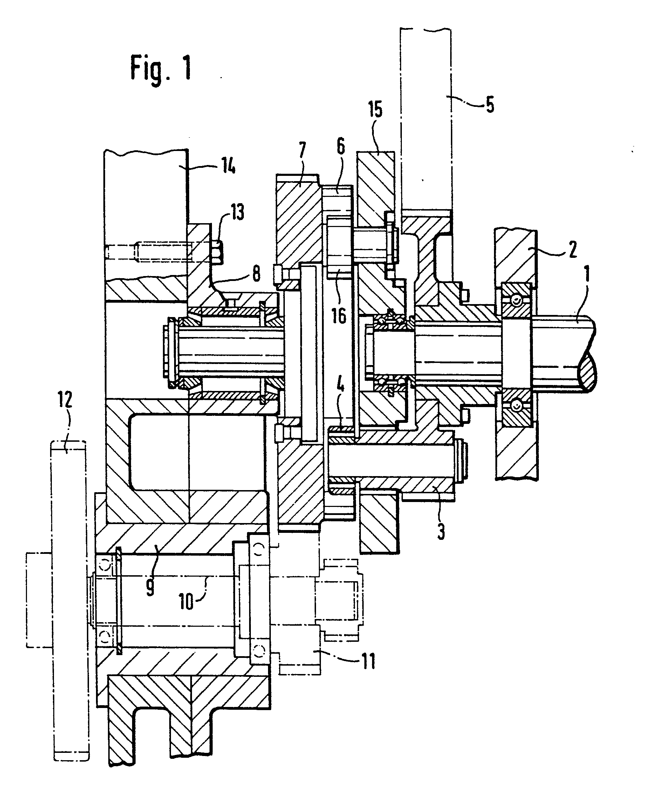

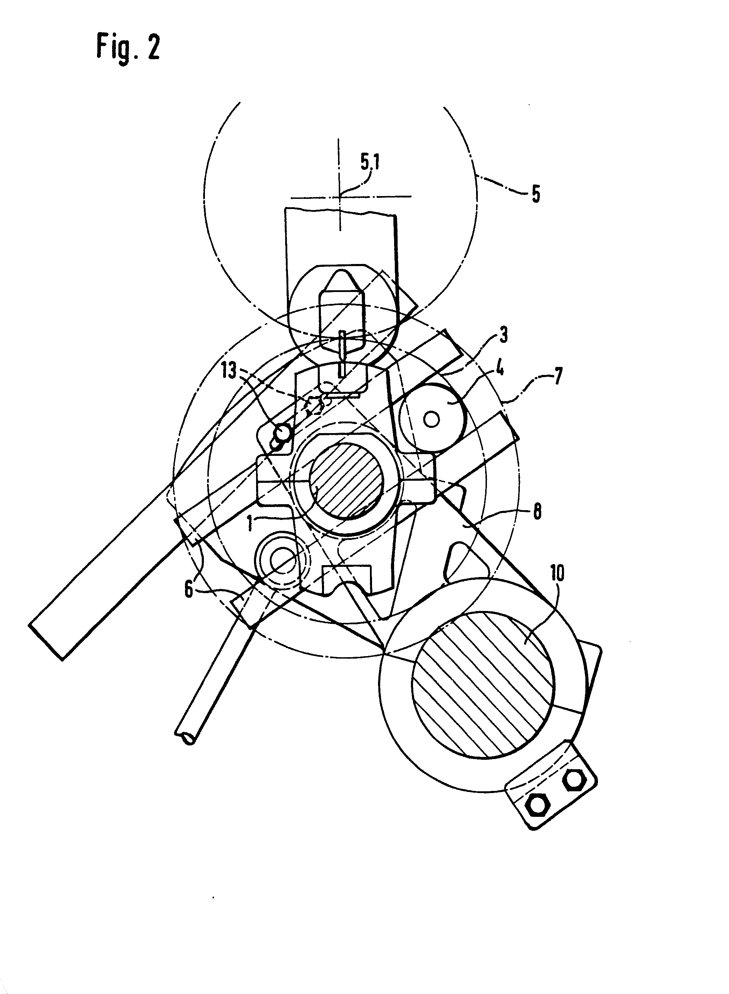

Das in den Fig. 1 bis 3 dargestellte Kurbelschleifengetriebe
enthält eine in dem Maschinengestell 2 gelagerte Welle 1, die
die Abtriebswelle des Kurbelschleifengetriebes bildet und zugleich auch die Welle einer mit einer Messerwalze zusammenwirkenden Nutwalze sein kann. Die Abtriebswelle 1 wird durch eine
Kurbel 3 angetrieben, die einen Kurbelzapfen in Form einer Rolle
4 trägt. Die Kurbel 3 ist gleichzeitig als ein Stirnrad ausgebildet, das mit einem Stirnrad 5 kämmt, das beispielsweise die
Welle der Messerwalze antreiben kann.

Die Rolle 4 ist in einer nutförmigen Gleitführung 6 geführt,
die an der Stirnseite des angetriebenen Zahnrades 7 befestigt
ist, das in einem Hebel 8 drehbar gelagert ist. Der Hebel 8 ist
auf einer Büchse 9 schwenkbar und feststellbar angeordnet. In
der Büchse 9 ist eine Welle 10 drehbar gelagert, die die Stirnräder 11 und 12 trägt. Das Stirnrad 12 ist in nicht dargestellter
Weise durch das Ritzel eines Motors oder ein anderes Zahnrad
angetrieben, während das Stirnrad 11 mit dem Zahnrad 7 kämmt.
Durch den Antrieb des Stirnrades 12 werden die Abtriebswelle 1
und die nicht dargestellte Welle des Zahnrades 7 in Drehung versetzt.

In der aus Fig. 1 ersichtlichen Stellung fluchten das Zahnrad 7
und die Abtriebswelle 1, so daß sich bei gleichmäßiger Drehbewegung des Zahnrades 7 auch die Abtriebswelle 1 in gleicher Weise
kontinuierlich dreht. Nach Lösen der Schrauben 13, durch die
der Hebel 8 an der Gestellwand 14 fixiert ist, kann der Hebel 8
auf der Büchse 9 verschwenkt werden, so daß sich die Ungleichförmigkeit des Kurbelschleifengetriebes einstellen läßt. Zum
Ausgleich der durch die Ungleichförmigkeit erzeugten Massenkräfte ist auf der Abtriebswelle 1 eine Schwungscheibe 15 frei drehbar
gelagert, an der ebenfalls eine einen Kurbelzapfen bildende
Rolle 16 gelagert ist, die ebenfalls in der nutförmigen Gleitführung 6 geführt ist. Die Schwungscheibe 15 ist mit einem kreisbogenförmigen Langloch 17 versehen, durch das die Achse der
Rolle 4 hindurchgreift. Die Rolle 16 ist diametral entgegengesetzt zur Rolle 4 angeordnet, so daß an der Rolle 16 Verzögerungskräfte auftreten, wenn die Rolle 4 beschleunigt wird, und umgekehrt. Die Schwungscheibe 15 ist so groß bemessen, daß die von
dieser erzeugten Massenkräfte in etwa den von beispielsweise
Nut- und Messerwalzen sowie den Antriebsrädern hervorgerufenen
Massenkräften entsprechen.

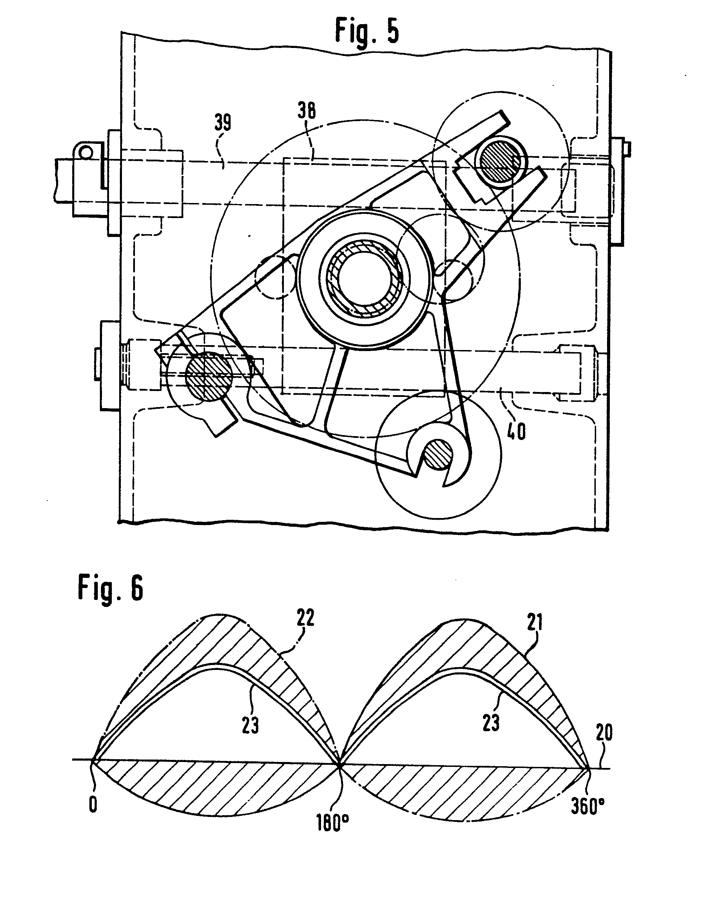

In Fig. 6 sind in einem Diagramm die auftretenden Massenkräfte
über der Nullinie während einer Umdrehung aufgetragen. Die
ausgezogene Linie 21 stellt die Massenkräfte eines Schneidwerks
und die strichpunktierte Linie 22 die Massenkräfte der Schwungscheibe 15 dar. Die Kräfte der beiden Massen sind, wie aus dem
Diagramm ersichtlich, um eine Phase von 180° zueinander versetzt, so daß sie sich zum Teil aufheben, indem die unter der
Nullinie 20 liegenden schraffierten Flächen von den über der
Linie 20 liegenden schraffierten Flächen abzuziehen sind. Die
verbleibenden Massenkräfte entsprechen den durch Doppellinien
23 dargestellten Beträgen.

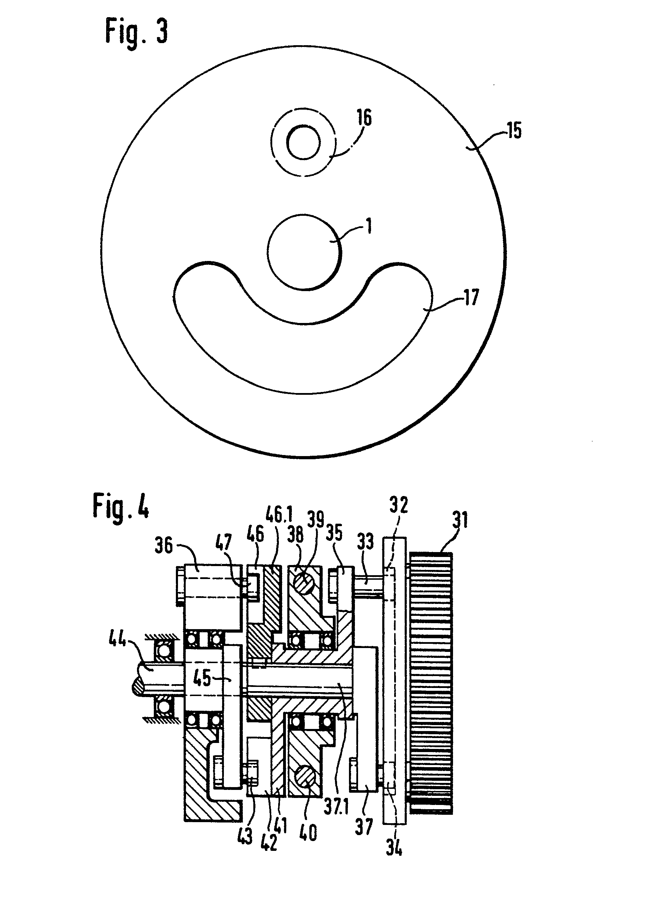

In den Fig. 4 und 5 ist ein doppeltes Kurbelschleifengetriebe
dargestellt. Der Antrieb erfolgt auf ein Stirnrad 31, das mit
einer Nut 32 versehen ist, in der Rollen 33 und 34 laufen,
wobei die Rolle 33 zu der die Kraft übertragenden Kurbel 35
und die Rolle 34 zu der die Ausgleichsmasse antreibenden
Kurbel 37 gehören. Die Kurbel 35 ist in einem Lagerbock 38
frei drehbar gelagert, der auf gestellfesten Bolzen 39, 40
verschieblich angeordnet ist. Der Lagerzapfen der Kurbel 35 ist durchbohrt und als Gleitlager für den Lagerzapfen 37.1
der Kurbel 37 ausgebildet. Der hohlgebohrte Lagerzapfen trägt
einen Arm 41 mit einer Nut 42, in die eine Rolle 43 eingreift,
die auf einem auf einer Abtriebswelle 44 befestigten Arm 45
frei drehbar gelagert ist. Der Lagerzapfen 37.1 trägt einen Arm
46.1 mit einer Nut 46, in der eine Rolle 47 läuft, die auf der
Ausgleichsmasse 36 frei drehbar gelagert ist. Die Ausgleichsmasse
36 ist auf der Abtriebsachse 44 lose drehbar gelagert. Durch
das Doppelkurbelschleifengetriebe gemäß Fig. 4 kann nach Verschieben auf den Bolzen 39, 40 eine hohe Ungleichförmigkeit
übertragen werden. Der Massenausgleich erfolgt wie bei dem
Getriebe gemäß Fig. 1.

Die Kurbelschleifengetriebe mit Massenausgleich können
zum Antrieb der Wellen von Messer- und Nutwalzen angewendet
werden, so daß sich Schnitte erzielen lassen, die kürzer oder
länger sind als der Umfang des von dem Messer durchlaufenen
Kreises. Bei derartigen Getrieben treten durch die Ungleichförmigkeit hohe Massenkräfte auf, die sich durch den durch die
Schwungscheiben geschaffenen Massenausgleich beträchtlich vermindern lassen.

Windmöller & Hölscher,
454o Lengerich

Ungleichförmigkeitsgetriebe mit Massenausgleich.

Patentansprüche:

1. Ungleichförmigkeitsgetriebe, vorzugsweise zum Antrieb
   von Messerwalzen, mit einer frei drehbar auf der Abtriebswelle gelagerten Schwungscheibe zum Massenausgleich,
   wobei die Schwungscheibe und die Abtriebswelle mit je
   einem Kurbelzapfen versehen sind, die von einer Antriebsscheibe angetrieben werden, dadurch gekennzeichnet,
   daß beide Kurbelzapfen (4, 33) in einer gemeinsamen,
   auf einer Durchmesserlinie der Antriebsscheibe (7)
   liegenden und mit dieser fest verbundenen Führung (6)
   gleiten und daß der Kurbelzapfen (4) der Antriebswelle
   (1) die Schwungscheibe (5) in einem bogenförmig gekrümmten
   Langloch (17) durchsetzt.

2. Ungleichförmigkeitsgetriebe nach dem Oberbegriff des
   Patentanspruchs 1, dadurch gekennzeichnet, daß zwei
   die beiden Kurbelzapfen (33, 34) tragende Wellen
   gleichachsig in einem im Maschinengestell längsverschieblichen Lagerbock (38) gelagert und an ihren den
   Kurbelzapfen gegenüberliegenden Enden mit Gleitführungen
   (42, 46) versehene Arme (41, 46.1) um 180° zu den die Kurbelzapfen tragenden Armen (35, 37) befestigt sind
und daß in den Gleitführungen Kurbelzapfen (43, 47)
geführt sind, von denen eine der im Gestell gelagerten
und mit der Welle der Gleitführung (32) fluchtenden
Abtriebswelle (44) und der andere dem gleichachsig zu
der Abtriebswelle gelagerten Schwungrad (36) zugeordnet
sind.

**Fig. 1**

**Fig. 2**

**Fig. 3**

**Fig. 4**

## Fig. 5

## Fig. 6